# EUROPEAN PATENT APPLICATION

(11) **EP 2 752 295 A1**
(43) Date of publication of application: **09.07.2014**
(21) Application number: 12827021.2
(22) Date of filing: 27.08.2012
(51) Int. Cl.: B32B 27/36, B44C 1/17

(54) **FILM FOR SIMULTANEOUS FORMATION AND TRANSCRIPTION**

(30) Priority: 02.09.2011 JP 2011191213; 09.08.2012 JP 2012176559
(71) Applicant: Mitsubishi Plastics, Inc., Tokyo 100-8252 (JP)
(72) Inventor: MUNE, Yasuhito, Maibara-shi Shiga 521-0234 (JP); IWASAKI, Hiroshi, Maibara-shi Shiga 521-0234 (JP); SUGIE, Takeshi, Maibara-shi Shiga 521-0234 (JP)
(74) Representative: Merkle, Gebhard
(86) International application number: PCT/JP2012/071571
(87) International publication number: WO 2013/031721

(57) **Abstract**

The present invention provides an in-mold transfer film that has an excellent gloss feel, is free from occurrence of blocking in a process for production of the transfer sheet, and has such a function that the film can be smoothly released from its boundary after completion of the in-mold transfer process. The in-mold transfer film of the present invention comprises a polyester film and a release layer formed on one surface of the polyester film, in which the polyester film is in the form of a laminated polyester film comprising at least three layers whose outermost layers both are formed of the same polyester composition, a number of projections present on a surface of the polyester film which have a height of not less than 0.05 *µ*m is not more than 1900/mm², and a number of projections present on a surface of the polyester film which have a height of not less than 0.6 *µ*m is not less than 25/mm².

## Description

### TECHNICAL FIELD

The present invention relates to an in-mold transfer film, and more particularly, to an in-mold transfer film that is useful as a substrate film for an in-mold decorating sheet used for decorating a resin molded product such as electric appliances and automobile parts.

### BACKGROUND ART

As one of methods for decorating a plastic molded product having a curved surface such as electric appliances, there has been extensively used a so-called in-mold forming method in which molding is performed simultaneously with transfer printing. In the in-mold forming method, a transfer sheet previously prepared by laminating a printing layer comprising a release layer, a surface protection layer, an ink layer and an adhesive layer, etc., on a base film is subjected to transfer printing on an injection-molded plastic product by utilizing heat and pressure generated upon the injection molding.

In recent years, the base film has been required to have both a high gloss for enhancing a printing clarity on the molded product and an anti-blocking property for enhancing a productivity which are contradictory to each other. As a method for allowing the base film to exhibit a high gloss, there is known the method of reducing sizes of particles added to a surface layer of the film or reducing a concentration of the particles added in the surface layer (see Patent Document 1). In addition, as a method for imparting an anti-blocking property to the base film, there is known the method of increasing sizes of particles added to a surface layer of the film or increasing a concentration of the particles in the surface layer to thereby form a coarse surface of the film (see Patent Document 2).

When reducing a diameter of the particles added to the surface layer of the film or reducing a concentration of the particle added in the surface layer, it might be possible to impart a high gloss to the film. However, when the transfer sheet is wound up into a roll in a printing layer processing step, the film tends to surfer from blocking to the surface protection layer or printing layer, etc., owing to the smoothened surface of the film, resulting in poor productivity thereof.

If the surface of the film is roughened by increasing a diameter of the particles added to the surface layer of the film or increasing the concentration of the particles in the surface layer, although it is possible to prevent occurrence of defects owing to blocking, the resulting film tends to be deteriorated in gloss, so that no delicate printing can be provided thereon.

### CITATION LIST

### PATENT LITERATURE

Patent Document 1: Japanese Patent Application Laid-Open (KOKAI) No. 2006-264135
Patent Document 2: Japanese Patent Application Laid-Open (KOKAI) No. 2007-268708

### SUMMARY OF THE INVENTION

### PROBLEMS TO BE SOLVED BY THE INVENTION

The present invention has been accomplished to solve the above conventional problems. An object of the present invention is to provide an in-mold transfer film that has an excellent gloss feel, is free from occurrence of blocking in a process for production of the transfer sheet, and has such a function that the film can be smoothly released from its boundary after completion of the in-mold transfer process.

### MEANS FOR SOLVING PROBLEMS

As a result of the present inventors' earnest study in view of the above conventional problems, it has been found that these problems can be readily solved by using a polyester film having a specific structure. The present invention has been attained on the basis of this finding.

That is, in an aspect of the present invention, there is provided an in-mold transfer film comprising a polyester film and a release layer formed on one surface of the polyester film, which polyester film is in the form of a laminated polyester film comprising at least three layers whose outermost layers both are formed of the same polyester composition,
a number of projections present on a surface of the polyester film which have a height of not less than 0.05 *µ*m being not more than 1900/mm², and
a number of projections present on a surface of the polyester film which have a height of not less than 0.6 *µ*m being not less than 25/mm².

### EFFECT OF THE INVENTION

In accordance with the present invention, it is possible to provide an in-mold transfer film that hardly suffers from defects such as blocking in a process for production of the transfer sheet, is excellent in fine printability, and needs no step of processing a release layer upon processing the transfer sheet. Therefore, the present invention has a very high industrial value.

### PREFERRED EMBODIMENTS FOR CARRYING OUT THE INVENTION

The present invention will be described in detail below. The "in-mold transfer film" is hereinafter referred to merely as a "film".

The dicarboxylic acid component of the polyester used in the present invention is preferably terephthalic acid, and may further comprise, as a comonomer component of the polyester, at least one known dicarboxylic acid such as oxalic acid, malonic acid, succinic acid, adipic acid, azelaic acid, sebacic acid, phthalic acid, isophthalic acid, naphthalenedicarboxylic acid, diphenyletherdicarboxylic acid and cyclohexanedicarboxylic acid. The diol component of the polyester used in the present invention is preferably ethylene glycol, and may further comprise, as a comonomer component of the polyester, at least one known diol such as propylene glycol, trimethylene glycol, tetramethylene glycol, hexamethylene glycol, 1,4-cyclohexane dimethanol, diethylene glycol, triethylene glycol, polyalkylene glycols and neopentyl glycol.

As the polymerization catalyst, there may be mentioned an antimony compound such as antimony trioxide and antimony pentoxide, a germanium compound and a titanium compound. Examples of the titanium compound include a tetraalkyl titanate, a tetraaryl titanate, an oxalic acid titanyl salt, titanyl oxalate, a titanium-containing chelate compound, titanium tetracarboxylate or the like. Specific examples of the titanium compound include tetraethyl titanate, tetrapropyl titanate, tetraphenyl titanate and partially hydrolyzed products thereof, ammonium titanyl oxalate, potassium titanyl oxalate and titanium triacetyl acetonate.

Also, the film of the present invention preferably comprises inorganic particles, organic salt particles or crosslinked polymer particles. Examples of the inorganic particles used in the present invention include particles of calcium carbonate, kaolin, talc, magnesium carbonate, barium carbonate, calcium sulfate, barium sulfate, lithium phosphate, calcium phosphate, magnesium phosphate, aluminum oxide, silicon oxide, titanium oxide, zirconium oxide and lithium fluoride. On the other hand, examples of the organic salt particles include particles of calcium oxalate and terephthalic acid salts of calcium, barium, zinc, manganese, magnesium, etc. Examples of the crosslinked polymer particles include particles of homopolymers or copolymers of divinyl benzene, styrene, acrylic acid, methacrylic acid, or vinyl-based monomers of acrylic acid or methacrylic acid. In addition, there may also be used organic particles of polytetrafluoroethylene, benzoguanamine resins, thermosetting epoxy resins, unsaturated polyester resins, thermosetting urea resins, thermosetting phenol resins or the like.

The shape of the particles used in the present invention is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The method of adding the particles to the polyester is not particularly limited, and any conventionally known methods can be suitably used therefor. For example, the particles may be added at any optional stages in the process for production of the polyester. The particles are preferably added to the polyester upon the stage of the esterification reaction or after completion of transesterification reaction to allow the polycondensation reaction to proceed. In addition, there may also be used the method of blending the polyester raw material with a slurry prepared by dispersing the particles in ethylene glycol or water using a vented kneading extruder, or the method of blending the polyester raw material with the dried particles using a kneading extruder.

The film of the present invention is a film having a multilayer structure comprising three or more layers. In the film before applying a release layer thereto, the layers of the film other than front and back surface layers may comprise a reclaimed raw material of the film, which results in improvement in productivity of the film.

Both of outermost layers of the film before applying a release layer thereto are formed of the same polyester composition. By adopting such a construction of the film, the front and back surface layers of the film before applying a release layer thereto may be co-extruded by one melting extruder only, resulting in excellent economy.

The number of projections present on the surface of the film according to the present invention which have a height of not less than 0.05 *µ*m is not more than 1900/mm², and preferably not more than 1700/mm². When the number of projections present on the surface of the film which have a height of not less than 0.05 *µ*m is more than 1900/mm², the resulting molded product tends to be deteriorated in gloss, so that it is not possible to provide fine printing thereon.

The number of projections present on the surface of the film according to the present invention which have a height of not less than 0.6 *µ*m is not less than 25/mm², and preferably not less than 35/mm². When the number of projections present on the surface of the film which have a height of not less than 0.6 *µ*m is less than 25/mm², blocking of the film tends to undesirably occur when the transfer sheet is wounded up into a roll in a step of processing a printing layer comprising a hard coat layer, an ink layer, an adhesive layer, etc.

The film of the present invention comprises a release layer on its surface contacting with a surface protection layer, an ink layer, etc., of the printing layer. The release layer may be formed on the film by an in-line coating method in the course of the step of producing the film. When the release layer is formed on one surface of the film by the in-line coating method, it is possible to omit processing of the release layer upon processing the transfer sheet, resulting in excellent economy. Meanwhile, in the case where the release layer is formed on one surface of the film by the in-line coating method, the number of projections present on the surface of the film is measured on a surface of the release layer. In this case, since the release layer itself is extremely thin, the number of projections measured on the surface of the release layer may be regarded as being the value measured on the surface of the film.

The thickness of the film according to the present invention is usually 10 to 250 *µ*m, preferably 10 to 100 *µ*m and more preferably 10 to 75 *µ*m.

Next, the process for producing the film according to the present invention is more specifically described. However, the present invention is not particularly limited thereto, and other modifications and changes are possible as long as they can satisfy the above requirements as defined by the present invention.

A chipped polyester composition is dried using an ordinary dryer or a vacuum dryer such as a hopper dryer, a paddle dryer and an oven. In a front stage of the drying, the chips are crystallized so as not to cause fusion therebetween (also referred to as "preliminary crystallization"), and in a rear stage of the drying, the content of water in the chips is sufficiently reduced (also referred to as "substantial drying"). After completion of the drying, the chips are extruded into a sheet at a temperature of 200 to 320°C. Upon the extrusion, it is possible to produce a laminated film having three or more layers by extruding the polyester using two or more melting extruders, i.e., by a so-called co-extrusion method. As the layer structure of the film, there may be mentioned the layer structure of A/B/A using a raw material A and a raw material B as well as the other layer structures. For example, the surface condition of the layer A is designed by using the raw material A comprising specific particles, and the raw material comprising no particles is used as the raw material B to thereby produce a film having the layer structure of A/B/A. Such a procedure is advantageous in view of costs because the raw material for the layer B may be freely selected. Further, even if a reclaimed material of the film is compounded in the layer B, it is possible to suitably design a surface roughness of the film by controlling a surface condition of the layer A as a surface layer, so that further advantages in view of costs can be attained. Next, a molten polymer is extruded from a die, and rapidly cooled and solidified on a chilled rotary drum such that the temperature of the obtained polymer sheet is dropped to not higher than a glass transition temperature of the polymer to obtain a substantially amorphous undrawn sheet. In this case, in order to enhance a flatness of the sheet, it is preferred to enhance adhesion between the sheet and a rotary chilled drum. For this purpose, in the present invention, an electrostatic pinning method and/or a liquid coating adhesion method are preferably adopted.

In the present invention, the thus obtained undrawn sheet is biaxially drawn to form a film. The preferred drawing conditions are specifically described below. That is, the undrawn sheet is drawn in a longitudinal direction thereof at a temperature of 70 to 145°C at a draw ratio of 2 to 6 times to form a monoaxially longitudinally drawn film. Then, the monoaxially longitudinally drawn film is drawn in a lateral direction thereof at a temperature of 90 to 120°C at a draw ratio of 2 to 6 times, and then subjected to heat-setting at a temperature of 150 to 240°C for 1 to 600 sec. In addition, in this case, in a maximum temperature zone of the heat-setting region and/or a cooling zone located at an outlet of the heat-setting region, the resulting film is preferably subjected to relaxation at a rate of 0.1 to 20% in longitudinal and/or lateral directions thereof. Further, the obtained film may also be subjected to re-longitudinal drawing step or re-lateral drawing step, if required.

In the in-line coating method, the coating step is conducted during the process of producing the polyester film. More specifically, the in-line coating method is a method in which the polyester film is subjected to a coating step at an optional stage during a period of from melt-extrusion of a raw polyester through biaxial drawing and then heat-setting thereof up to rolling-up of the resulting film. Usually, either a substantially amorphous undrawn sheet obtained after rapidly cooling a molten polyester, a monoaxially drawn film obtained by drawing the undrawn sheet in a length direction (longitudinal direction) thereof, or a biaxially oriented film before undergoing the heat-setting is subjected to the coating step.

Among these methods, more preferred is the method in which after the monoaxially drawn film is subjected to the coating step, the coated monoaxially drawn film is dried and drawn in a lateral direction thereof in a tenter, and then subjected to heat-setting together with the base film. In such a method, the formation of the film and the application of the coating layer thereon can be conducted at the same time, which is advantageous in view of production costs. Since the drawing step is conducted after the coating step, a thin coating layer can be readily formed on the polyester film. Further, since the heat-setting after the coating step is conducted at a high temperature that is not achievable by the other methods, the obtained coating layer can be enhanced in film-forming property, and strong adhesion between the coating layer and the polyester film can be attained.

In particular, in the case where using the resulting film as an in-mold transfer film, it is undesirable that breakage or delamination is caused inside of the coating layer or between the coating layer and the film. However, the coating layer formed by the in-line coating method can be kept in excellent conditions from these viewpoints. In particular, in the case where the coating layer comprises the below-mentioned thermosetting compound, there can be attained such a merit that any reaction residual groups hardly remain in the coating layer by the high-temperature treatment in the in-line coating method. When using the resulting film as an in-mold transfer base film, if any reaction residual groups remain in the coating layer, the resulting transfer film tends to be deteriorated in releasability owing to the reaction of the residual groups with components in a surface protection layer thereof during the step of processing the transfer sheet.

The release layer used in the present invention comprises, as a constituting material thereof, at least one material selected from the group consisting of a fluorine compound, a long-chain alkyl compound and a wax. These releasing agents may be used alone or in combination of any two or more thereof.

The fluorine compounds usable in the present invention are those compounds comprising a fluorine atom therein. From the standpoint of good surface properties of the in-line coating layer, among these fluorine compounds, organic fluorine compounds are preferably used. Examples of the organic fluorine compounds include perfluoroalkyl group-containing compounds, polymers of fluorine atom-containing olefin compounds, and aromatic fluorine compounds such as fluorobenzene. In view of good heat resistance and antistaining property upon transferring, these fluorine compounds are preferably in the form of high-molecular compounds.

The long-chain alkyl compounds used in the present invention are those compounds comprising a linear or branched alkyl group having not less than 6 carbon atoms and especially preferably having not less than 8 carbon atoms. The upper limit of the number of carbon atoms in the long-chain alkyl compounds is usually 30. Specific examples of the long-chain alkyl compounds include long-chain alkyl group-containing polyvinyl resins, long-chain alkyl group-containing acrylic resins, long-chain alkyl group-containing polyester resins, long-chain alkyl group-containing amino resins, long-chain alkyl group-containing ether compounds and long-chain alkyl group-containing quaternary ammonium salts, although not particularly limited thereto. In view of preventing transfer of the components derived from the release layer to a counterpart base material to which the release film is attached when the release film is peeled off therefrom, these long-chain alkyl compounds are preferably in the form of high-molecular compounds.

The waxes usable in the present invention are those waxes selected from natural waxes, synthetic waxes and mixtures of these waxes. Examples of the natural waxes include vegetable waxes, animal waxes, mineral waxes and petroleum waxes. Specific examples of the vegetable waxes include candelilla waxes, carnauba waxes, rice waxes, haze waxes and jojoba oils. Specific examples of the animal waxes include beeswaxes, lanolin and spermaceti waxes. Specific examples of the mineral waxes include montan waxes, ozokerite and ceresin. Specific examples of the petroleum waxes include paraffin waxes, microcrystalline waxes and petrolatum. Specific examples of the synthetic waxes include synthetic hydrocarbons, modified waxes, hydrogenated waxes, fatty acids, acid amides, amines, imides, esters and ketones. As the synthetic hydrocarbons, there are well known Fischer-Tropsch waxes (alias: Sasol Wax), polyethylene waxes or the like. In addition, those polymers having a low molecular weight (specifically, those polymers having a viscosity number-average molecular weight of 500 to 20000) are also included in the synthetic hydrocarbons. Specific examples of the synthetic hydrocarbons include polypropylene, ethylene-acrylic acid copolymers, polyethylene glycol, polypropylene glycol, and blocked or grafted combined products of polyethylene glycol and polypropylene glycol. Specific examples of the modified waxes include montan wax derivatives, paraffin wax derivatives and microcrystalline wax derivatives. The derivatives as used herein mean compounds obtained by subjecting the respective waxes to any treatment selected from refining, oxidation, esterification and saponification, or combination of these treatments. Specific examples of the hydrogenated waxes include hardened castor oils and hardened castor oil derivatives.

As the thermosetting compounds used in the release layer in the present invention, there may be used various known resins. Examples of the thermosetting compounds include melamine compounds, epoxy compounds, oxazoline compounds and isocyanate compounds. Of these thermosetting compounds, from the viewpoints of maintaining an excellent heat resistance upon heat-transferring and preventing deterioration in releasing property, preferred are melamine compounds. These thermosetting compounds are functioned as a crosslinking agent for the long-chain alkyl compounds.

Examples of the melamine compounds usable in the present invention include alkylolated or alkoxyalkylolated melamine-based compounds such as methoxymethylated melamines and butoxymethylated melamines. In addition, those compounds obtained by subjecting urea, etc., to co-condensation with a part of melamine may also be used as the melamine compounds.

Examples of the epoxy compounds usable in the present invention include compounds having an epoxy group in a molecule thereof, and prepolymers and cured products of the compounds. Typical examples of the epoxy compounds include a condensation product of epichlorohydrin and bisphenol A. In particular, a reaction product of a low-molecular polyol and epichlorohydrin can provide an epoxy resin having an excellent water solubility.

Examples of the oxazoline compounds usable in the present invention include those compounds having an oxazoline ring in a molecule thereof such as monomers having an oxazoline ring and polymers synthesized by using the oxazoline compound as one of raw monomers thereof.

Examples of the isocyanate compounds usable in the present invention include those compounds having an isocyanate group in a molecule thereof. Specific examples of the isocyanate compounds include hexamethylene diisocyanate, trimethyl hexamethylene diisocyanate, cyclohexylene diisocyanate, xylylene diisocyanate, isophorone diisocyanate, naphthalene diisocyanate, tolylene diisocyanate, and polymers or derivatives of these compounds.

These thermosetting compounds may be used alone or in the form of a mixture of any two or more thereof. Also, these compounds may be used together with a catalyst in order to promote heat-curing thereof. Further, in view of the application to in-line coating, etc., the thermosetting compounds preferably have a water solubility or a water dispersibility. The thermosetting compounds may be usually used in an amount of 5 to 100 parts by weight, preferably 10 to 80 parts by weight and more preferably 15 to 50 parts by weight based on 100 parts by weight of the at least one compound selected from the group consisting of the fluorine compound, the long-chain alkyl compound and the wax.

The release film used in the present invention may further comprise a binder polymer for the purpose of enhancing adhesion between the polyester film and the release layer and improving coating surface conditions of the release layer.

The "binder polymer" that may used in the present invention is defined as a high-molecular compound having a number-average molecular weight (Mn) of not less than 1000 as measured by gel permeation chromatography (GPC) according to a flow scheme for evaluation of safety of high-molecular compounds (Council of Chemical Substances; November, 1985), and exhibiting a good film-forming property.

Specific examples of the binder polymer include polyester resins, acrylic resins, urethane resins, polyvinyl resins, polyalkylene glycols, polyalkylene imines, celluloses, starches, etc.

In addition, for the purpose of improving a fixing property and a slip property of the coating layer, the coating layer may also comprise inert particles. Specific examples of the inert particles include particles of silica, alumina, kaolin, calcium carbonate and titanium oxide, and organic particles.

Further, the release layer may also comprise various additives such as a defoaming agent, a coatability improver, a thickening agent, an organic lubricant, an antistatic agent, an antioxidant, an ultraviolet absorber, a foaming agent and a dye, if required, unless the subject matter of the present invention is adversely affected by addition thereof.

In the present invention, as the method of forming the release layer on the polyester film, there may be used conventionally known coating methods such as a reverse gravure coating method, a direct gravure coating method, a roll coating method, a die coating method, a bar coating method and a curtain coating method which are described, for example, in Yuji HARAZAKI, "Coating Methods", Maki-shoten, 1979.

In the present invention, the curing conditions used upon forming the release layer on the polyester film are not particularly limited. For example, in the case where the release layer is formed by an in-line coating method, the release layer may be subjected to heat-setting usually at a temperature of 170 to 280°C for 3 to 40 sec and preferably at a temperature of 200 to 280°C for 3 to 40 sec. Also, the heat-setting may be used in combination with irradiation with active energy rays such as irradiation with ultraviolet rays, if required. Meanwhile, as the energy sources for curing by the irradiation with active energy rays, there may be used conventionally known apparatuses and energy sources.

The coating solution used in the present invention is preferably in the form of an aqueous solution or a water dispersion in view of good handing property and working environmental conditions and comprises water as a main solvent, and may also comprise an organic solvent as long as it falls within the scope of the present invention.

The amount of the coating layer applied is usually 0.003 to 1.5 g/m², preferably 0.005 to 0.5 g/m² and more preferably 0.005 to 0.1 g/m². When the amount of the coating layer applied is less than 0.003 g/m², there is such a fear that the resulting coating layer fails to exhibit a sufficient performance. When the amount of the coating layer applied is more than 1.5 g/m², the resulting coating layer tends to be deteriorated in appearance and tends to induce undesirable increase in costs.

In the present invention, the resulting transfer film may be provided, on its surface opposed to the surface on which the release layer is formed, with another coating layer such as an antistatic layer, an adhesive layer, an oligomer deposition-preventing layer and the like, or the opposite surface of the transfer film may be subjected to chemical treatment or discharge treatment.

### EXAMPLES

The present invention is described in more detail below by the following Examples. However, the following Examples are only illustrative and not intended to limit the present invention thereto, and any other modifications and changes are possible unless they depart from the scope of the present invention. In the following Examples and Comparative Examples, the terms "part(s)" and "%" as used herein represent "part(s) by weight" and "% by weight", respectively, unless otherwise specified.

### (1) Surface roughness on surface of film (RMS, P-V):

Using a non-contact surface profile measurement system ("MN537N-M100" manufactured by Micromap Inc.) utilizing a direct phase detection interference method, i.e., a so-called two-beam interference method, RMS (root mean-square surface roughness) and P-V (maximum height) of the surface of the film were measured in a measuring range of 428 *µ*m x 320 *µ*m. Meanwhile, the measurement was conducted at a measuring wavelength of 530 nm using an objective lens having a magnification of 20 times in twelve fields of view to determine an surface roughness of the film that was defined as an average value of surface roughness values in the ten fields of view except for the two fields of view in which maximum and minimum surface roughness values were measured among the twelve fields of view.

### (2) Number of projections having a height of not less than 0.05 µm and number of projections having a height of not less than 0.6 µm on surface of film:

Using a 3D surface roughness meter ("Surfcorder SE3500K" manufactured by Kosaka Laboratory Ltd.), the height and number of projections on the surface of the film were measured under the conditions including a radius of a tip end of a probe of 5 *µ*m, a probe pressure of 30 mg, a x-direction measuring length of 0.5 mm (x-direction measuring pitch: 0.1 *µ*m; number of measuring points in x-direction: 5001 points), a y-direction measuring length of 0.6 mm (y-direction measuring pitch: 3 *µ*m; number of measuring points in y-direction: 200 points), a cut-off value of 0.25 mm and a z-direction magnification of 20000 times.

The height of respective projections (X, (*µ*m)) as described in the present invention is defined as a height from a zero (0) level that means a height of a point at which the number of the projections becomes maximum as observed in a distribution curve prepared by plotting the number of the projections (Y, (number/mm²)) relative to respective heights of the projections. The number of the projections having a height of not less than 0.05 *µ*m and the number of the projections having a height of not less than 0.6 *µ*m were expressed by the total number of the projections having a height of more than 0.05 *µ*m as measured by the above method and the total number of the projections having a height of more than 0.6 *µ*m as measured by the above method, respectively.

### (3) Printing clarity:

The color of the molded product imparted with an ink layer having a color of black, red, yellow, blue, etc., was observed by naked eyes and evaluated according to the following ratings.
A: All of colors were clear (acceptable level without practical problems).
B: Colors were slightly clear (acceptable level without practical problems).
C: Colors were unclear (unacceptable level with practical problems).

### (4) Evaluation of anti-blocking property:

Four transfer sheets each provided on a release layer with a surface protection layer and an ink layer, etc., were laminated in the same direction, and a load of 4 kg/8 cm² was applied to the obtained laminated film at 70°C. Thereafter, the condition of the laminated film was observed by naked eyes.

The anti-blocking property of the film was evaluated according to the following ratings.
A: Blocking occurred only in a portion of 8 cm² to which the load was applied.
B: Blocking occurred in surrounding slightly spread portions in addition to the portion of 8 cm² to which the load was applied.
C: Blocking occurred in surrounding widely spread portions in addition to the portion of 8 cm² to which the load was applied.

Next, the polyester raw materials used in the following Examples, etc., are explained.

### <Polyester 1>

Terephthalic acid as a dicarboxylic acid component and ethylene glycol as a polyhydric alcohol component were subjected to melt-polycondensation by an ordinary method, thereby obtaining polyester chips having an intrinsic viscosity of 0.66 dL/g and comprising no slip agent particles.

### <Polyester 2>

The polyester 1 was subjected to solid state polymerization by an ordinary method, thereby obtaining polyester chips having an intrinsic viscosity of 0.85 dL/g and comprising no slip agent particles.

### <Polyester 3>

Terephthalic acid as a dicarboxylic acid component and ethylene glycol as a polyhydric alcohol component were subjected to melt-polycondensation by an ordinary method, thereby obtaining polyester chips having an intrinsic viscosity of 0.66 dL/g and comprising 0.60 part of amorphous silica A having an average particle diameter of 3.1 *µ*m.

### <Polyester 4>

Terephthalic acid as a dicarboxylic acid component and ethylene glycol as a polyhydric alcohol component were subjected to melt-polycondensation by an ordinary method, thereby obtaining polyester chips having an intrinsic viscosity of 0.66 dL/g and comprising 0.30 part of amorphous silica B having an average particle diameter of 3.1 *µ*m. Meanwhile, the amorphous silica B used in the polyester 4 had a less number of voids and harder than the amorphous silica A used in the polyester 3.

### <Polyester 5>

Terephthalic acid as a dicarboxylic acid component and ethylene glycol as a polyhydric alcohol component were subjected to melt-polycondensation by an ordinary method, thereby obtaining polyester chips having an intrinsic viscosity of 0.66 dL/g and comprising 1.0 part of calcium carbonate having an average particle diameter of 1.4 *µ*m.

### <Polyester 6>

Terephthalic acid as a dicarboxylic acid component and ethylene glycol as a polyhydric alcohol component were subjected to melt-polycondensation by an ordinary method, thereby obtaining polyester chips having an intrinsic viscosity of 0.66 dL/g and comprising 1.0 part of calcium carbonate having an average particle diameter of 1.0 *µ*m.

Examples of the compounds constituting the release layer are as follows.

### (Examples of compounds)

### •Long-chain alkyl compound (a):

A four-necked flask was charged with 200 parts of xylene and 600 parts of octadecyl isocyanate, and the contents of the flask were heated while stirring. From the time at which reflux of xylene was initiated, 100 parts of polyvinyl alcohol having an average polymerization degree of 500 and a saponification degree of 88 mol% were slowly added to the flask at the intervals of 10 min over about 2 hr. After completion of addition of polyvinyl alcohol, the contents of the flask were further refluxed for 2 hr, and the reaction was stopped. The obtained reaction mixture was cooled to about 80°C and then added in methanol, thereby obtaining a reaction product in the form of a white precipitate. The thus obtained precipitate was removed by filtration, and 140 parts of xylene were added thereto to completely dissolve the precipitate therein, followed by adding methanol again to the resulting solution to obtain a precipitate. The above procedure was repeated several times. Thereafter, the obtained precipitate was washed with methanol, and then dried and pulverized to obtain the aimed compound.

### •Thermosetting compound (b):

Alkylol melamine/urea copolymer crosslinking resin ("BECKAMINE J101" produced by DIC Corp.)

### Example 1:

The polyester 2, polyester 3 and polyester 5 were compounded with each other at a weight ratio of 89:8:3, and the resulting resin mixture was charged into an extruder and melted therein, and then fed into an outer layer A die portion of a laminated die, whereas the polyester 1 only was fed at a weight ratio of 100 to an inner layer B die portion of the laminated die. The respective raw materials were extruded through the laminated die to thereby obtain a two-kind resin/three-layer laminated polyester resin film having a structure of an outer layer A/an inner layer B/an outer layer A. The thus extruded laminated polyester resin film was cast over a chilled drum at 35°C and rapidly cooled and solidified on the chilled drum to obtain an undrawn film. Next, the resulting undrawn film was preheated by heating rolls at 80°C and then drawn between the heating rolls at 90°C in a longitudinal direction of the film at a draw ratio of 3.2 times by using an infrared heater in combination therewith. Thereafter, a coating solution comprising the long-chain alkyl compound (a) and the thermosetting compound (b) at a weight ratio of 80:20 was applied onto the thus drawn sheet such that the coating amount (after dried) was 0.030 g/m². Then, the film was grasped with clips at ends thereof and introduced into a tenter. The film was drawn in the tenter in a lateral direction thereof at a draw ratio of 4.0 times while heating at 95°C, and then subjected to heat-setting at 235°C for 10 min, thereby obtaining a polyester film having an average thickness of 50 *µ*m. The properties of the resulting film were shown in Table 1. As a result, the obtained film exhibited excellent properties.

### Example 2:

The same procedure as in Example 1 was conducted except that the polyester 2 and polyester 4 were compounded with each other at a weight ratio of 84:16 and melted in an extruder, and the resulting molten resin mixture was fed into the outer layer A die portion of the laminated die, thereby obtaining a polyester film. The properties of the resulting film were shown in Table 1. As a result, the obtained film exhibited excellent properties.

### Example 3:

The same procedure as in Example 1 was conducted except that the polyester 2, polyester 3 and polyester 4 were compounded with each other at a weight ratio of 91:3:6 and melted in an extruder, and the resulting molten resin mixture was fed into the outer layer A die portion of the laminated die, thereby obtaining a polyester film. The properties of the resulting film were shown in Table 1. As a result, the obtained film exhibited excellent properties.

### Example 4:

The same procedure as in Example 1 was conducted except that the polyester 2, polyester 3 and polyester 4 were compounded with each other at a weight ratio of 92:4:4 and melted in an extruder, and the resulting molten resin mixture was fed into the outer layer A die portion of the laminated die, thereby obtaining a polyester film. The properties of the resulting film were shown in Table 1. As a result, it was confirmed that when a transfer sheet obtained by laminating a printing layer comprising a surface protection layer, an ink layer, an adhesive layer, etc., on the thus obtained film was wound into a roll, blocking slightly occurred thereon, but the film was still kept in a practically usable level.

### Example 5:

The same procedure as in Example 1 was conducted except that the polyester 2 and polyester 3 were compounded with each other at a weight ratio of 80:20 and melted in an extruder, and the resulting molten resin mixture was fed into the outer layer A die portion of the laminated die, thereby obtaining a polyester film. The properties of the resulting film were shown in Table 1. As a result, although the resulting molded product had a slightly clear color, the molded product was still kept in a practically usable level. Further, it was confirmed that when a transfer sheet obtained by laminating a printing layer comprising a surface protection layer, an ink layer, an adhesive layer, etc., on the thus obtained film was wound into a roll, blocking slightly occurred thereon, but the film was still kept in a practically usable level.

### Comparative Example 1:

The same procedure as in Example 1 was conducted except that the polyester 2, polyester 3 and polyester 6 were compounded with each other at a weight ratio of 89:8:3 and melted in an extruder, and the resulting molten resin mixture was fed into the outer layer A die portion of the laminated die, thereby obtaining a polyester film. The properties of the resulting film were shown in Table 2. As a result, it was confirmed that when a transfer sheet obtained by laminating a printing layer comprising a surface protection layer, an ink layer, an adhesive layer, etc., on the thus obtained film was wound into a roll, considerable blocking occurred thereon, and the film was in a practically unusable level.

### Comparative Example 2:

The same procedure as in Example 1 was conducted except that the polyester 2 and polyester 3 were compounded with each other at a weight ratio of 71:29 and melted in an extruder, and the resulting molten resin mixture was fed into the outer layer A die portion of the laminated die, thereby obtaining a polyester film. The properties of the resulting film were shown in Table 2. As a result, it was confirmed that the resulting molded product had an unclear color and therefore was in a practically unusable level.

**Table 1**

| | Examples | | | | |
|---|---|---|---|---|---|
| | 1 | 2 | 3 | 4 | 5 |
| RMS (nm) | 42 | 44 | 36 | 34 | 41 |
| P-V (nm) | 2114 | 1835 | 1443 | 1448 | 1385 |
| Number of projections with height of 0.05 *µ*m or more (number/mm²) | 1686 | 1300 | 1030 | 906 | 1720 |
| Number of projections with height of 0.6 *µ*m or more (number/mm²) | 50 | 57 | 37 | 30 | 27 |
| Printing clarity of molded product | A | A | A | A | B |
| Anti-blocking property | A | A | A | B | B |

**Table 2**

| | Comparative Examples | |
|---|---|---|
| | 1 | 2 |
| RMS (nm) | 40 | 55 |
| P-V (nm) | 1876 | 1734 |
| Number of projections with height of 0.05 *µ*m or more (number/mm²) | 1800 | 2326 |
| Number of projections with height of 0.6 *µ*m or more (number/mm²) | 20 | 47 |
| Printing clarity of molded product | B | C |
| Anti-blocking property | C | A |

### INDUSTRIAL APPLICABILITY

The film of the present invention can be suitably used, for example, as a substrate film for an in-mold decorating sheet used for decorating a resin molded product such as electric appliances and automobile parts.

## Claims

1. An in-mold transfer film comprising a polyester film and a release layer formed on one surface of the polyester film, which polyester film is in the form of a laminated polyester film comprising at least three layers whose outermost layers both are formed of the same polyester composition,
a number of projections present on a surface of the polyester film which have a height of not less than 0.05 *µ*m being not more than 1900/mm², and
a number of projections present on a surface of the polyester film which have a height of not less than 0.6 *µ*m being not less than 25/mm².

2. The in-mold transfer film according to claim 1,
wherein the release layer comprises at least one substance selected from the group consisting of a fluorine compound, a long-chain alkyl compound and a wax.

3. The in-mold transfer film according to claim 2,
wherein the long-chain alkyl compound is at least one compound selected from the group consisting of a long-chain alkyl group-containing polyvinyl resin, a long-chain alkyl group-containing acrylic resin, a long-chain alkyl group-containing polyester resin, a long-chain alkyl group-containing amino resin, a long-chain alkyl group-containing ether compound and a long-chain alkyl group-containing quaternary ammonium salt (in which number of carbon atoms in the long-chain alkyl group is 6 to 30).

4. The in-mold transfer film according to claim 2 or 3,
wherein the release layer comprises the at least one substance (a) selected from the group consisting of a fluorine compound, a long-chain alkyl compound and a wax, and at least one thermosetting compound (b) selected from the group consisting of a melamine compound, an epoxy compound, an oxazoline compound and an isocyanate compound, a content of the component (b) in the release layer being 5 to 100 parts by weight based on 100 parts by weight of the component (a).
